Europäisches Patentamt

European Patent Office

Office européen des brevets

(19)

(11) **EP 0 752 181 B1**

(12) **FASCICULE DE BREVET EUROPEEN**

(45) Date de publication et mention
de la délivrance du brevet:
**09.05.2001 Bulletin 2001/19**

(21) Numéro de dépôt: **96901828.2**

(22) Date de dépôt: **22.01.1996**

(51) Int Cl.⁷: **H04M 9/08**

(86) Numéro de dépôt international:
**PCT/FR96/00100**

(87) Numéro de publication internationale:
**WO 96/23384 (01.08.1996 Gazette 1996/35)**

(54) **ANNULEUR D'ECHO ACOUSTIQUE A FILTRE ADAPTATIF ET PASSAGE DANS LE DOMAINE FREQUENTIEL**

ECHOKOMPENSATION MIT ADAPTIVEM FILTER IM FREQUENZBEREICH

FREQUENCY-DOMAIN ADAPTIVE-FILTER ACOUSTIC ECHO CANCELLER

(84) Etats contractants désignés:
**AT BE CH DE DK ES GB GR IE IT LI LU MC NL PT SE**

(30) Priorité: **24.01.1995 FR 9500777**

(43) Date de publication de la demande:
**08.01.1997 Bulletin 1997/02**

(73) Titulaires:
• **MATRA NORTEL COMMUNICATIONS
29000 Quimper (FR)**
Etats contractants désignés:
**DE DK GB GR IE LU MC NL PT SE**
• **Eads Defence and Security Networks
78180 Montigny Le Bretonneux (FR)**
Etats contractants désignés:
**BE CH ES IT LI AT**

(72) Inventeurs:
• **BOUDY, Jérôme
F-78330 Fontenay-le-Fleury (FR)**
• **CAPMAN, François
F-78000 Versailles (FR)**

(74) Mandataire: **Fort, Jacques
CABINET PLASSERAUD
84, rue d'Amsterdam
75440 Paris Cedex 09 (FR)**

(56) Documents cités:
**EP-A- 0 301 627          EP-A- 0 534 837**

• **SIGNAL PROCESSING, vol. 27, no. 3, Juin 1992,
AMSTERDAM, NL, pages 301-315, XP000363587
J.M. PAEZ BORRALLO ET AL.: cité dans la
demande**

EP 0 752 181 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne les annuleurs d'écho acoustique destinés à des terminaux téléphoniques utilisés dans des conditions telles que le signal de sortie vers une ligne téléphonique est affecté d'un écho acoustique et souvent de bruits dus à l'environnement. Elle trouve une application particulièrement importante dans les installations susceptibles de comporter des terminaux mains-libres portables et dans les installations de télé-conférence.

On utilise souvent, dans les annuleurs d'écho acoustique, des filtres adaptatifs transverses travaillant dans le domaine temporel. Leur réalisation se heurte à de nombreuses difficultés. Le nombre de coefficients nécessaire pour modéliser la réponse impulsionnelle d'un trajet d'écho acoustique est très élevé. Les signaux de parole ont un degré élevé d'auto-corrélation et ils sont non-stationnaires. Enfin le signal reçu par le capteur d'entrée (microphone en général) comporte non seulement l'écho acoustique, mais aussi le bruit ambiant et la parole du locuteur proche, en cas de parole simultanée.

Pour tenir compte de la longueur de la réponse impulsionnelle et du degré élevé de corrélation, on a déjà proposé d'utiliser des filtres mettant en oeuvre un algorithme travaillant dans le domaine fréquentiel. Mais des problèmes de résistance au bruit ambiant et de prise en compte de la situation de paroles simultanées du locuteur proche et du locuteur lointain subsistent.

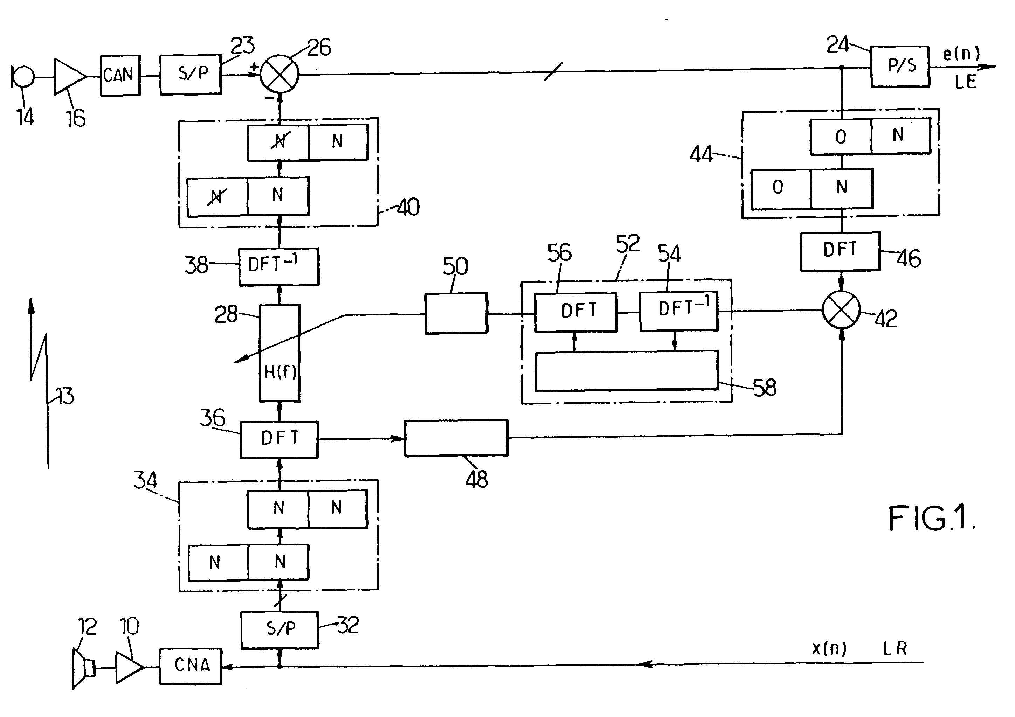

Des tentatives ont été faites pour améliorer les caractéristiques des filtres transverses adaptatifs travaillant dans le domaine temporel ou dans le domaine fréquentiel. Dans le domaine temporel, on a en particulier proposé d'appliquer l'algorithme du gradient stochastique, dit LMS, par blocs d'échantillons plutôt qu'échantillon par échantillon. Le gradient est alors estimé bloc à bloc et fournit une indication de l'inter-corrélation entre les signaux d'entrée et d'erreur sur le bloc correspondant. On a également proposé des annuleurs d'écho adaptatifs opérant dans le domaine fréquentiel basés sur des techniques de convolution rapide de type dit OLS (recouvrement et conservation) ou OLA (recouvrement et addition). La figure 1 montre le schéma général d'un filtre adaptatif utilisable dans un annuleur d'écho de ce genre. Le signal numérique entrant x(n), où n est l'ordre de l'échantillon est appliqué à un haut parleur 12 après conversion numérique-analogique CNA et amplification par un amplificateur 10. L'écho acoustique arrive, par un trajet 13, au détecteur 14, constitué généralement par un microphone. Ce microphone reçoit également le bruit ambiant, et, à certains moments, un signal de parole du locuteur proche. Le signal, amplifié en 16, est mis sous forme numérique z (n) par un convertisseur analogique-numérique 22.

L'annuleur d'écho du terminal proche est interposé entre la ligne de réception LR recevant le signal entrant et la ligne d'émission LE fournissant le signal sortant. Du fait que le filtre opère sur des blocs, il comporte, sur la ligne LE, un convertisseur d'entrée série-parallèle 23 et un convertisseur de sortie parallèle-série 24 entre lesquels est interposé un additionneur 26 qui reçoit sur une entrée additive les blocs d'échantillons d'entrée, et sur une entrée soustractive les blocs de signaux de correction, élaborés par un filtre adaptatif 28.

L'annuleur d'écho montré en figure 1 travaille dans le domaine fréquentiel et utilise une procédure de partition avec recouvrement. Cela conduit à calculer une transformée de Fourier (ou plus généralement une transformée de passage du domaine temporel au domaine fréquentiel), ayant une taille égale à deux fois la longueur de la réponse impulsionnelle estimée N. Le filtre 28 reçoit le signal entrant x(n) par l'intermédiaire d'un convertisseur série-parallèle 32 permettant de constituer des blocs, d'un circuit de partition en blocs, avec recouvrement, et d'un circuit 36 de calcul de transformée de Fourier discrète, dite TFD ou DFT. Symétriquement, la sortie du filtre 28 est appliquée à un circuit 38 de calcul de transformée de Fourier inverse, ou DFT$^{-1}$ et, par l'intermédiaire d'un circuit de recouvrement 40, récupérant le dernier bloc à l'additionneur 26.

Les moyens d'adaptation des coefficients du filtre fréquentiel 28 ont une constitution générale connue. Ils comportent un multiplieur 42 qui reçoit d'une part les échantillons de sortie de l'additionneur 26 par l'intermédiaire de moyens de partition et d'un circuit de calcul de TFD 46 et d'autre part la conjuguée 48 de la TFD élaborée par le circuit 36. La sortie du multiplieur 42 attaque le circuit 50 d'adaptation des coefficients du filtre 28 ; ce circuit peut utiliser un des algorithmes habituels, tels que l'algorithme fréquentiel du gradient stochastique, dit FLMS.

Dans le mode de réalisation montré en figure 1, une contrainte supplémentaire sur le gradient est apportée par un circuit 52. Ce circuit comporte une TFD inverse 54 et une TFD directe 56, nécessaires de façon à forcer à zéro les derniers N échantillons. de la réponse impulsionnelle, les transformées étant calculées sur 2N, c'est-à-dire deux fois la longueur de la réponse impulsionnelle estimée. La contrainte sur le gradient peut être mémorisée sous forme d'une matrice de contrainte dans un circuit 58 interposé entre les transformées inverse et directe.

Au lieu d'une transformée de Fourier, on peut utiliser une autre transformée dans le domaine fréquentiel, par exemple la transformée en cosinus ou la transformée de Hartley rapide. Diverses réalisations de filtres acoustiques ayant la constitution généralement montrée en figure 1 ont déjà été décrites. On peut par exemple se reporter à l'article de Borrallo et al, "On the implementation of a partitioned block frequency domain adaptive filter" (PBFDAF) for long acoustic echo cancellation, Signal processing, volume 27, No. 3, pages 301-315, juin 1992.

Lorsque la réponse impulsionnelle est courte, ce qui est notamment le cas d'un téléphone mains-libres destiné à être utilisé dans un véhicule, une technique à recouvrement de blocs peut être utilisée sans qu'une partition des blocs soit nécessaire pour réduire la complexité. Elle met par exemple en oeuvre l'algorithme dit FLMSO (contraint) ou UFLMSO (non contraint).

Il est difficile de donner aux annuleurs d'écho fréquentiels du genre décrit ci-dessus une résistance suffisante au bruit. Les algorithmes habituels sont par ailleurs très sensibles à la valeur du pas d'incrémentation. Aux faibles rapports signal un bruit, il est nécessaire de réduire cette valeur, ce qui ralentit l'adaptation ; même dans ce cas, des débuts de divergence peuvent s'amorcer. On connaît par ailleurs (EP-A-0 301 627) une annuleur d'écho numérique utilisant un filtre programmable travaillant dans le domaine temporel et un filtre adaptatif fonctionnant dans le domaine fréquentiel, avec un montage en cascade qui allonge le retard de transmission.

On connaît également (article de J.M. Paez Borrallo et al dans Signal Processing 27, (1992) p. 301-315, Elsevier Science publishers) un annuleur d'écho à large bande, utilisant une partition de la réponse impulsionnelle dans le domaine temporel avant implémentation du filtrage dans le domaine fréquentiel.

La présente invention vise notamment à fournir un annuleur d'écho fréquentiel amélioré du point de vue de la rapidité d'adaptation, présentant néanmoins un faible retard de transmission et améliorant les performances de l'annulation d'écho.

Dans ce but l'invention propose d'utiliser une technique de soustraction spectrale, dont l'emploi a déjà été envisagé dans d'autres domaines tels que la reconnaissance de paroles, en profitant de ce que le passage dans le domaine fréquentiel est déjà disponible dans les annuleurs d'écho du genre ci-dessus définis.

En conséquence, l'invention propose un annuleur d'écho acoustique disposé à être placé entre une interface acoustique mains libres et un réseau de communication, comprenant :

- un filtre adaptatif recevant les coefficients d'une transformée directe discrète dans le domaine fréquentiel, calculés sur des blocs successifs d'un signal d'entrée, et attaquant, par l'intermédiaire d'un circuit de transformée inverse, l'entrée soustractive d'un additionneur de formation d'un signal de sortie allant vers le réseau ; et
- un circuit d'adaptation des coefficients du filtre,

caractérisé en ce que ledit circuit d'adaptation reçoit les coefficients des transformées successives des blocs d'échantillons du signal de sortie par l'intermédiaire d'un réducteur de bruit. Ce réducteur de bruit est avantageusement un soustracteur spectral dont l'entrée soustractive reçoit les coefficients représentatifs du spectre estimé du bruit.

On peut utiliser divers modèles de bruit, suivant l'environnement. Le modèle peut être estimé a priori ou plus généralement déterminé au cours de périodes de silence (pause de parole de la part des locuteurs proche et éloigné). La constitution des moyens de soustraction spectrale de bruit et les algorithmes mis en oeuvre peuvent être ceux décrits dans l'article de Lockwood et Boudy J. "Experiments with a Nonlinear Specral Subtractor (NSS). Hidden Markov Models and the projection, for robust speech recognition in cars", Speech Communication, Vol. 11, Nos 2-3, pp 215-228, June 1992, ou dans le document EP-A-0 534 837.

L'algorithme d'adaptation du poids des coefficients du filtre travaille dans le domaine fréquentiel peut alors être

$$\overset{\bullet}{H}(k+1) = \overset{\bullet}{H}(k) + 2F.g.F^{-1}.m(k).X^H(k).SPS\,[\overset{\bullet}{E}(k)]$$

où

k est l'ordre du bloc courant,
F désigne la matrice de transformée de Fourier discrète, ou DFT ;
g est la matrice de contrainte sur le gradient ;
m est la matrice diagonale des pas d'incrémentation normalisés en puissance d'entrée ;
$\overset{\bullet}{H}$ est le vecteur des coefficients du filtre adaptatif 28 ; SPS désigne l'opérateur de soustraction spectrale ;
$\overset{\bullet}{X}^H$ est le vecteur des échantillons d'entrée x(n)
E est le vecteur des échantillons de sortie e(n), en l'absence de double parole.

Quel que soit l'algorithme d'adaptation utilisé, la soustraction spectrale n'apporte pas de complication notable, puisque les transformées directe et inverse sont de toute façon nécessaires.

Le processus d'adaptation d'un filtre adaptatif, dans le domaine fréquentiel ou dans le domaine temporel, est perturbé par la présence simultanée d'une activité vocale aux terminaux proche et éloigné (situation dite de double parole).

Pour éviter ces perturbations, il est courant d'interrompre ou de ralentir le processus d'adaptation des coefficients du filtre en cas de double parole. Mais la plupart des détecteurs de double parole existants ont une réponse lente, sont souvent incapables de différencier la présence de double parole d'une modification du canal d'écho augmentant le niveau d'écho et/ou ne fonctionnent pas dans un environnement très bruité du fait qu'ils sont fondés sur une observation d'énergie.

L'invention propose en conséquence un détecteur de double parole utilisable dans un annuleur d'écho du genre ci-dessus, utilisantun critère fiable d'identification de présence de parole du locuteur proche. Ce détecteur effectue une mesure de distorsion spectrale en comparant des paramètres spectraux extraits du signal de sortie de l'interface (dûs au locuteur éloigné) aux paramètres spectraux correspondants extraits du signal d'entrée (dû au bruit, à l'écho et au locuteur proche en cas de double parole). Un accroissement brusque de la discordance entre les signaux indique la présence d'une interférence de forte énergie, due à la parole proche ou au bruit. En conséquence, il est proposé un annuleur d'écho comprenant des moyens d'extraction de paramètres spectraux et des moyens d'évaluation de distorsion par comparaison des dits paramètres et de commande d'arrêt d'adaptation en cas de distorsion élevée.

L'évaluation de distorsion peut utiliser différents critères.

Un premier critère possible est la mesure de distance au sens d'Itakura-Saito entre deux modèles autorégressifs (constituant l'extraction de paramètres) calculés sur les signaux d'entrée et de sortie.

Une autre approche consiste à utiliser des distances cepstrales, utilisant des paramètres cepstraux déjà utilisés pour la reconnaissanec de parole, comme indiqué par exemple dans l'article de Alexandre et al "Root Cepstral Analysis: A Unified View - Application to Speech Processing in Car Noise Environnments" dans Speech Communication 12, pp 277-288, 1993.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1, déjà mentionnée, montre la constitution de principe d'un annuleur d'écho dans le domaine fréquentiel ;
- la figure 2 similaire à une fraction de la figure 1, est un synoptique de principe montrant une modification possible de l'annuleur d'écho de la figure 1 suivant un aspect de l'invention :

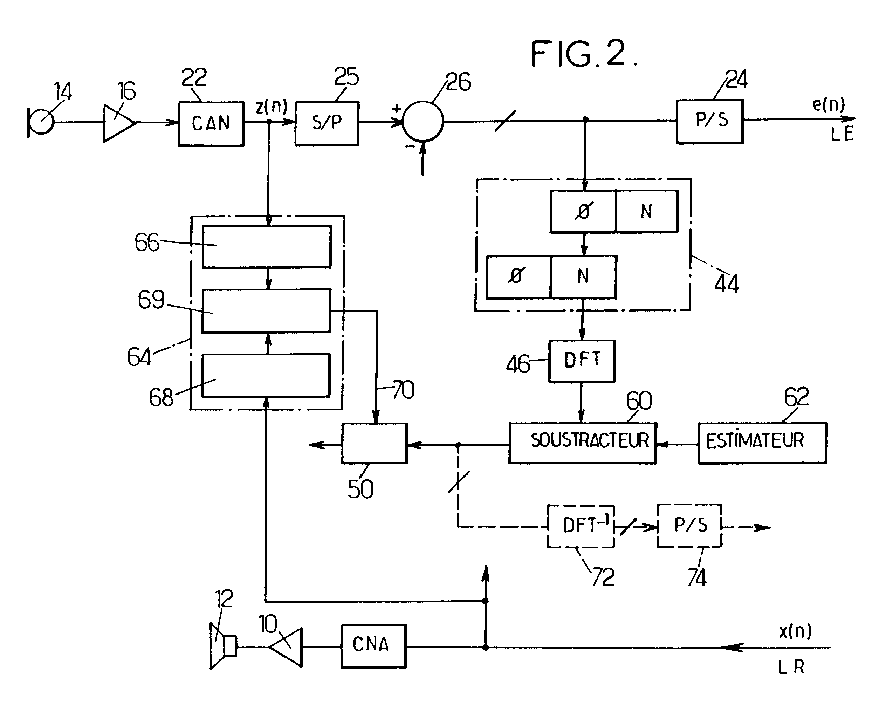

Sur la figure 2, les éléments correspondants à ceux de la figure 1 sont désignés par le même numéro de référence. On supposera par la suite que l'annuleur est destiné à une installation téléphonique mains-libres, destinée à fonctionner dans la bande allant de 300 Hz à 3,4 Khz, avec échantillonnage à 8 Khz ; mais la même constitution pourrait être utilisée dans un terminal mains-libres prévu pour opérer en bande large de 16 Khz. Les blocs peuvent être par exemple de 256 échantillons, ce qui correspond à une durée de 32ms à la fréquence d'échantillonnage courante de 8 Khz.

L'annuleur d'écho de la figure 2 ne comporte pas de moyens imposants une contrainte sur le gradient. Mais il comporte un soustracteur spectral 60 qui reçoit d'une part les coefficients de la transformée directe calculée sur un bloc, d'autre part les coefficients correspondants représentatifs du bruit, provenant d'un estimateur 62. Cet estimateur peut être remis à jour pendant des périodes de non activité vocale, par des moyens non représentés, tels que ceux décrits dans les documents mentionnés plus hauts. Le soustracteur 60 fournit ainsi, au circuit 50 d'adaptation des coefficients du filtre, une matrice de coefficient de transformation directe corrigée de l'effet du bruit.

L'absence d'activité vocale peut être déterminée par différents moyens connus, fondés par exemple sur une mesure d'énergie dans un domaine fréquentiel déterminé, d'une part sur le signal arrivant au haut parleur 12, d'autre part sur le signal de sortie du microphone.

Cependant, l'inhibition de l'estimateur 62 peut également être provoquée d'une part par mesure de l'énergie du signal attaquant le haut parleur, par détection d'une situation de double parole. Cette situation peut être notamment décelée par un bloc 64 de mesure de distorsion spectrale. Ce bloc comporte deux extracteurs de paramètres spectraux 66 et 68, recevant l'un le signal z(n) de sortie du convertisseur analogique, numérique 22, l'autre le signal montrant x(n). Le bloc comporte enfin un circuit 69 de mesure de similarité entre les paramètres représentatifs des signaux x(n) et z(n). Ces paramètres peuvent être notamment ceux mentionnés plus haut. En cas de détection d'un écart représentatif d'une forte distorsion, le circuit 68 applique un signal de blocage ou de ralentissement d'adaptation de la matrice diagonale m qui comporte les pas d'adaptation du filtre, sur une entrée 70 du circuit 50.

L'annuleur d'écho peut facilement être prévu pour fournir un signal de parole débruitée en mettant simplement en oeuvre une transformée inverse supplémentaire 72 et un circuit de conversion parallèle-série 74.

## Revendications

1. Annuleur d'écho acoustique disposé à être placé entre une interface acoustique mains libres et un réseau de communication, comprenant :

- un filtre adaptatif (28) recevant les coefficients d'une transformée directe discrète dans le domaine fréquentiel, calculés sur des blocs successifs d'un signal d'entrée, et attaquant, par l'intermédiaire d'un circuit de transformée inverse, l'entrée soustractive d'un additionneur de formation d'un signal de sortie allant vers le réseau, et

- un circuit d'adaptation des coefficients du filtre (50),

caractérisé en ce que ledit circuit d'adaptation reçoit les coefficients des transformées successives des blocs d'échantillons du signal de sortie par l'intermédiaire d'un réducteur de bruit (60) ambiant.

2. Annuleur d'écho selon la revendication 1, caractérisé en ce que le réducteur de bruit est un soustracteur spectral dont l'entrée soustractive reçoit les coefficients représentatifs du spectre estimé du bruit ambiant.

3. Annuleur d'écho selon la revendication 2, caractérisé en ce que ledit circuit d'adaptation des coefficients met en oeuvre l'algorithme :

$$\overset{\bullet}{H}(k+1)= \overset{\bullet}{H}(k)+2F.g.F^{-1}.m(k).\overset{\bullet}{X}{}^{H}(k).SPS[\overset{\bullet}{E}(k)]$$

où :

k est l'ordre du bloc courant ;
F désigne la matrice de transformée de Fourier discrète, ou DFT ;
g est la matrice de contrainte sur le gradient ;
m est la matrice diagonale des pas d'incrémentation normalisés en puissance d'entrée ;
$\overset{\bullet}{H}$ est le vecteur des coefficients du filtre adaptatif (28) ;
SPS désigne l'opérateur de soustraction spectrale ;
$\overset{\bullet}{X}{}^{H}$ est le vecteur des échantillons d'entrée x(n) ;
$\overset{\bullet}{E}$ est le vecteur des échantillons de sortie e(n), en l'absence de double parole.

4. Annuleur d'écho selon la revendication 1, 2 ou 3, caractérisé par des moyens pour contrôler l'adaptation en cas d'interférence d'énergie élevée due au bruit ou à un état de double parole.

5. Annuleur d'écho selon la revendication 4, caractérisé en ce qu'il comprend des moyens d'extraction de paramètres spectraux et des moyens d'évaluation de distorsion par comparaison des dits paramètres des signaux d'entrée, locuteur proche, et de sortie, locuteur éloigné, de l'interface.

6. Annuleur d'écho selon la revendication 5, caractérisé en ce que les dits moyens de comparaison mettent en oeuvre une mesure de la distance au sens d'Itakura-Saito entre deux modèles auto-régressifs, constituant l'extraction de paramètres calculés sur les signaux d'entrée et de sortie.

7. Annuleur d'écho selon la revendication 5, caractérisé en ce que les dits moyens de comparaison utilisent des paramètres cepstraux des signaux d'entrée et de sortie.

8. Annuleur d'écho selon l'une quelconque des revendications 1 à 6, caractérisé en ce qu'il comprend, de plus, un circuit de fourniture de signal de parole de locuteur proche débruité, le dit circuit étant prévu pour effectuer une transformée inverse (72), à partir du domaine fréquentiel et une conversion parallèle-série (74).

**Patentansprüche**

1. Vorrichtung zum Unterdrücken eines akustischen Echos zur Anordnung zwischen einer akustischen Freisprech-Schnittstelle und einem Kommunikationsnetz, welche aufweist:

- ein Adaptivfilter (28), welches die anhand von aufeinanderfolgenden Blöcken eines Eingangssignals berechneten Koeffizienten einer diskreten direkten Transformation im Frequenzbereich empfängt und mittels einer inversen Transformationsschaltung den Subtraktionseingang eines Addierers zur Bildung eines zum Netz gehenden Ausgangssignals treibt, und
- eine Schaltung (50) zum Anpassen der Koeffizienten des Filters,

dadurch gekennzeichnet, daß die Anpassungsschaltung die Koeffizienten der aufeinanderfolgenden Transformationen der Blöcke von Abtastproben des Ausgangssignals über einen Umgebungsgeräuschbegrenzer (60) empfängt.

2. Echounterdrückungsvorrichtung nach Anspruch 1, dadurch gekennzeichnet, daß der Geräuschbegrenzer ein Spektralsubtrahierer ist, dessen Subtraktionseingang die für das geschätzte Spektrum des Umgebungsgeräusches repräsentativen Koeffizienten empfängt.

3. Echounterdrückungsvorrichtung nach Anspruch 2, dadurch gekennzeichnet, daß die Schaltung zum Anpassen der Koeffizienten den Algorithmus anwendet:

$$\overset{\bullet}{H}(k+1) = \overset{\bullet}{H}(k) + 2F \cdot g \cdot F^{-1} \cdot m(k) \cdot \overset{\bullet}{X}^{H}(k) \cdot SPS[\overset{\bullet}{E}(k)]$$

wobei:

k die Ordnung des momentanen Blockes ist;
F die Matrix der diskreten Fouriertransformation bzw. DFT bezeichnet;
g die Matrix der Einschränkung auf den Gradienten ist;
m die diagonale Matrix der gemäß der Eingangsleistung normalisierten Inkrementierschritte ist;
$\overset{\bullet}{H}$ der Vektor der Koeffizienten des Adaptivfilters (28) ist;
SPS den Operator der Spektralsubtraktion bezeichnet;
$\overset{\bullet}{X}^{H}$ der Vektor der Eingangs-Abtastproben x(n) ist;
$\overset{\bullet}{E}$ der Vektor der Ausgangs-Abtastproben e(n) in Abwesenheit von Gegensprechen ist.

4. Echounterdrückungsvorrichtung nach Anspruch 1, 2 oder 3, gekennzeichnet durch Mittel zum Steuern der Anpassung im Fall einer Störung mit erhöhter Energie infolge des Geräusches oder eines Gegensprechzustandes.

5. Echounterdrückungsvorrichtung nach Anspruch 4, dadurch gekennzeichnet, daß sie Mittel zum Extrahieren von Spektralparametern und Mittel zum Bewerten einer Verzerrung durch Vergleich der Parameter der Eingangssignale, naher Sprecher, und Ausgangssignale, ferner Sprecher, der Schnittstelle aufweist.

6. Echounterdrückungsvorrichtung nach Anspruch 5, dadurch gekennzeichnet, daß die Vergleichsmittel ein Itakura-Saito-Abstandsmaß zwischen zwei autoregressiven Modellen anwenden, das die Extrahierung von anhand der Eingangs- und Ausgangssignale berechneten Parametern darstellt.

7. Echounterdrückungsvorrichtung nach Anspruch 5, dadurch gekennzeichnet, daß die Vergleichsmittel Cepstralparameter der Eingangs- und Ausgangssignale anwenden.

8. Echounterdrückungsvorrichtung nach einem der Ansprüche 1 bis 6, dadurch gekennzeichnet, daß sie des weiteren eine Schaltung zum Liefern eines geräuschunterdrückten Sprachsignals des nahen Sprechers aufweist, wobei die Schaltung zum Durchführen einer inversen Transformation (72) aus dem Frequenzbereich und einer Parallel-Seriell-Umsetzung (74) vorgesehen ist.

**Claims**

1. An acoustical echo canceller designed to be placed between a hands-free acoustical interface and a communications network, the canceller comprising:

- an adaptive filter (28) receiving the coefficients of a direct discrete transform in the frequency domain, computed on successive blocks of an input signal, and applied via an inverse transform circuit to the subtractive input of an adder for forming an output signal going towards the network; and
- a circuit for adapting the filter coefficients (50) ;

characterized in that said adaptor circuit receives the coefficients of the successive transforms of blocks of output signal samples via an ambient noise reducer.

2. An echo canceller according to claim 1, characterized in that the noise reducer is a spectral subtracter whose substractive input receives the coefficients representative of the estimated spectrum of the ambient noise.

3. An echo canceller according to claim 2, characterized in that the circuit for adapting the coefficients implements the following algorithm:

$$\dot{\mathbf{H}}(k+1) = \dot{\mathbf{H}}(k) + 2F.g.F^{-1}.m(k).\dot{\mathbf{x}}^{H}(k).SPS[\dot{\mathbf{E}}(k)]$$

where:

k is the order of the current block;
F designates the matrix of the discrete Fourier transform (DFT);
g is the gradient constraint matrix;
m is the diagonal matrix of input power normalized incrementation steps;
$\dot{\mathbf{H}}$ is the vector of coefficients of the adaptive filter (28);
SPS designates the spectral subtraction operator;
$\dot{\mathbf{x}}^{H}$ is the vector of input samples x(n);
$\dot{\mathbf{E}}$ is the vector of output samples e(n) in the absence of double speech.

4. An echo canceller according to claim 1, 2, or 3, characterized by means for controlling adaptation in the event of high energy interference due to noise or to a state of double speech.

5. An echo canceller according to claim 4, characterized in that it includes means for extracting spectral parameters and comparator means for evaluating distortion by comparing said parameters of the input signal, near speaker, and of the output signal, remote speaker of the interface.

6. An echo canceller according to claim 5, characterized in that said comparator means implement a measurement of distance in the Itakura-Saito sense between two self-regressive models, constituting extraction of parameters computed on the input and output signals.

7. An echo canceller according to claim 5, characterized in that the said comparator means use cepstral parameters of the input and output signals.

8. An echo canceller according to any one of claims 1 to 6, characterized in that it further includes a circuit for supplying a de-noised speech signal of the near speaker, said circuit being provided to perform an inverse transform (72) from the frequency domain, and a parallel-to-series conversion (74).

FIG.1.

FIG. 2.